# EUROPEAN PATENT SPECIFICATION

(11) **EP 0 553 918 B1**
(45) Date of publication and mention of the grant of the patent: **02.11.1995**
(21) Application number: 93200149.8
(22) Date of filing: 21.01.1993
(51) Int. Cl.: F04D 5/00, F16N 7/18

(54) **Pump device for a viscous fluid**
Pumpvorrichtung für eine viskose Flüssigkeit
Dispositif de pompage pour un fluide visceux

(30) Priority: 28.01.1992 IT MI920152
(43) Date of publication of application: 04.08.1993
(73) Proprietor: FIAT AUTO S.p.A., 10135 Torino (IT)
(72) Inventor: Galdi, Paolo, I-80127 Napoli (IT)
(74) Representative: Fusina, Gerolamo

(56) References cited:
- GB-A- 1 400 531
- GB-A- 2 152 141
- SOVIET PATENTS ABSTRACTS Section PQ, Week 8940, 15 November 1989 Derwent Publications Ltd., London, GB; Class Q56, AN 89-291798 & SU-A-1 448 108 (LENGD SHIPBUILD INS) 30 December 1988

## Description

This invention relates to a pump device for a viscous fluid, for example a lubricating fluid.

Viscous fluids, in particular lubricating fluids, are usually moved by various types of pumps or similar devices which are particularly costly or suffer from a certain constructional complexity.

GB-A-1 400 531 shows a pump device according to the preamble of claim 1 which comprises a rotor surrounded by a two-part housing which are provided with shallow spiral pumping grooves.

An object of the present invention is to provide a device of pump type for moving a viscous fluid, for example a lubricating fluid, which although being of excellent operation is extremely simple to construct, is of small overall size, is light in weight and is of low cost.

A further object is to enable its parts to be easily removed and overhauled without high cost, and to provide extreme operational reliability.

This object is attained according to the present invention by a pump device for a viscous fluid, for example a lubricating fluid, according to claim 1.

The characteristics of, and the advantages deriving from, a plate element according to the present invention will be more apparent from the description of a non-limiting embodiment thereof given with reference to the accompanying drawings in which:
Figure 1 is a longitudinal section showing one embodiment of a lifting pump device according to the present invention; and
Figure 2 is a side view of only the plate element provided with the helical recess.

With reference to the figures, a pump device for moving a viscous fluid, for example a lubricating fluid, within a vehicle, a machine tool or the like, comprises a drive shaft 11, partly shown, connected to a relative motor means, not shown.

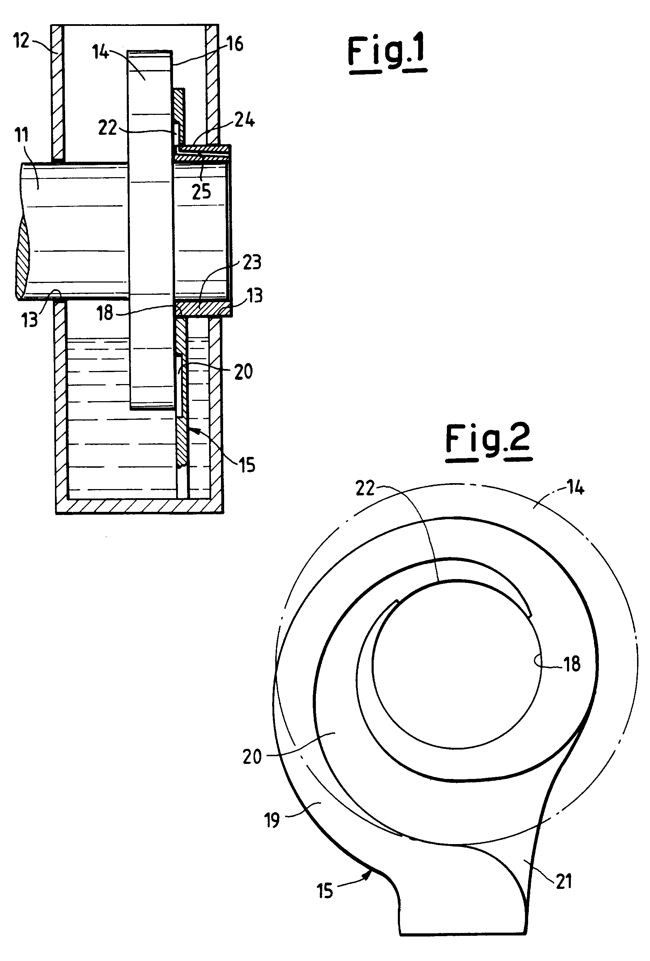

The shaft 11 extends into an element 12 containing a viscous fluid (Figure 1) and is supported at 13 rotatable relative to the element walls.

Specifically, the pump device comprises a unit provided with an entry mouth for the fluid contained in the containing element 12 and a mouth for its exit to the outside.

The unit consists of a first plate element or plate 14 rotating rigidly with the shaft 11 and facing a second plate element 15 fixed rigidly to the containing element 12.

In the illustrated example the first plate element 14 has a lateral surface 16 facing the second plate element 15.

The second plate element 15 has a through central hole 18 for mounting on the drive shaft 11 and is elongate towards its base, where it is fixed to the containing element 12.

That surface 19 of the second plate element 15 facing the flat lateral surface 16 of the first plate element 14 comprises a helical recess 20 eccentric to the shaft 11. The ends of the helical recess 20 form a first downwardly-facing widened mouth 21 and a second mouth 22 radially facing inwards towards the shaft 11.

The helical recess 20 narrows in the direction of the fluid flow, ie from the first mouth 21 to the second mouth 22, to favour the pumping effect of the device according to the invention.

The diameter of the shaft 11 is less than the diameter of the central hole 18 of the second plate element 15. A sleeve element 23 is inserted into the interspace which is thus created between the shaft 11 and the second plate element 15. In the present embodiment the sleeve element 23 extends from the side wall of the containing element 12, acts as a support for the shaft 11 and abuts, fluid-tight under rotation, against the surface 16 of the first plate element 14.

From the upper outer surface 24 of the sleeve element 23, which faces the second mouth 22 of the second plate element 15, there is provided at least one passageway or channel 25. The channel 25 passes into the body of the sleeve element 23 and emerges towards the outside, it being of suitable shape or inclination, for example in the form of a spiral.

In this manner the rotation of the first plate element 14 causes the viscous fluid, for example oil, into which it dips in the containing element 12 and which is deposited on the lateral surface 16 of the first plate element 14, to be dragged towards the first mouth 21 of the second plate element 15.

The oil is made to rise within the recess 20 by the rotation of the first plate element 14 and is dragged into proximity with the second mouth 22 of the second plate element 15. This flow is facilitated by the shape of the helical recess 20, which narrows towards the second mouth 22 to cause forward pumping of the viscous fluid.

The second mouth 22 faces the channel 25, which provides feed into the interior of the sleeve element 23. The viscous fluid or oil passes through the channel 25, the form and/or inclination of which facilitates flow or pumping, and then passes to the outside of the pump device and containing element 12, for example to a height greater than the initial containing element 12 or into any other container into which the fluid has to be moved.

This embodiment provides an upward movement or lifting of the fluid contained in the initial containing element 12.

In contrast to the illustrated embodiment, the passageway or channel 25 can be replaced by a series of channels positioned offset from each other.

A pump or like arrangement has hence been achieved within a first plate element, which enables a viscous fluid to be moved from an initial container to a different position or user.

## Claims

1. A pump device for moving a viscous fluid, for example a lubricating fluid, comprising a unit provided with entry and exit mouths for said fluid, and relative fixed and rotating parts for moving said fluid within said unit between said entry and exit mouths wherein said unit consists of a pair of mutually facing plate elements (14,15), of which a first (14) rotates rigid with a drive shaft (11) of said device and a second (15) is fixed with respect to said first rotating plate element (14), said second plate element (15) having a central through hole (18) to be mounted on said shaft (11) and being provided on that lateral surface (19) facing said first plate element (14) with a helical recess (20) which has its ends in the form of a first mouth (21) facing said first plate element (14) and a second mouth (22) radially facing said central shaft (11), said helical recess (20) narrowing in the direction in which the fluid flows, there being provided at least one passageway (25) which at one end faces the second mouth (22) of said second plate element (15) and at the other end faces the outlet of said device, characterised in that said first and second plate elements (14,15) are inserted in a containing element (12) for said viscous fluid, said second plate element (15) being fixed rigidly to said containing element (12) so that said first mouth, which is the entry mouth (21) is positioned near to the bottom of said containing element (12), between said central hole (18) of said second plate element (15) and said rotating shaft (11), said fluid flowing from said first mouth (21) to said second mouth (22), there being provided a sleeve element (23) which is fixed to said second plate element (15) and in which is provided said at least one passageway (25), said helical recess (20) being eccentric to the hole for said shaft (11).

2. A pump device for moving a viscous fluid as claimed in claim 1, characterised in that said at least one passageway is inclined relative to the direction of said shaft (11).

## Patentansprüche

1. Pumpe zum Fördern einer viskosen Flüssigkeit, beispielsweise einer Schmierflüssigkeit, mit einer Einheit, die eine Eingangsöffnung und eine Ausgangsöffnung für diese Fllüssigkeit aufweist sowie realtiv zueinander feststehende oder drehende Teile zum Fördern der Flüssigkeit innerhalb dieser Einheit zwischen der Einlaß- und der Auslaßöffnung, wobei diese Einheit aus einem Paar von aufeinander zu weisenden, plattenförmigen Bauteilen (14, 15) besteht, von denen ein erstes Bauteil (14) fest auf einer Antriebswelle (11) der Pumpe angeordnet ist und mit ihr umläuft und ein zweites (15) in bezug auf das erste, umlaufende, plattenförmige Bauteil (14) feststeht, wobei das zweite, plattenförmige Bauteil (15) eine mittige Durchlaßbohrung (18) hat, um auf der Antriebswelle (11) gelagert zu werden und an derjenigen Seitenfläche (19), die auf das erste, plattenförmige Bauteil (14) zuweist, mit einer spiralförmigen Vertiefung (20) versehen ist, deren Enden in Form einer ersten Einlauföffnung (21) auf das erste, plattenförmige Bauteil (14) zuweist und deren zweite Auslaßöffnung (22) radial auf die Antriebswelle (11) zuweist, wobei ferner die spiralförmige Vertiefung (20) in derjenigen Richtung verengt ist, in der die Flüssigkeit fließt, und wobei schließlich wenigstens ein Durchlaß (25) vorgesehen ist, der mit einem Ende der zweiten Auslaßöffnung (22) des zweiten, plattenförmigen Bauteils (15) gegenüberliegt und dessen anderes Ende dem Ausgang der Pumpe gegenüberliegt,
dadurch **gekennzeichnet,** daß sowohl das erste als auch das zweite plattenförmige Bauteil (14, 15) in einem Behälter (12) liegen, wobei das zweite, plattenförmige Bauteil (15) fest am Behälter (12) angebracht ist, so daß die erste Öffnung, die die Einlauföffnung (21) ist, nahe am Boden des Behälters (12) liegt, wobei ferner zwischen der mittigen Durchlaßbohrung (18) des zweiten, plattenförmigen Bauteils (15) und der Antriebswelle (11) eine Hülse (23) angeordnet ist, die am zweiten, plattenförmigen Bauteil (15) befestigt ist und die wenigstens einen Durchlaß (25) aufweist, wobei schließlich die spiralförmige Vertiefung (20), in der die Flüssigkeit von der ersten, der Einlauföffnung (21) zur zweiten, der Auslaßöffnung (22) strömt, zur mittigen Bohrung für die Antriebswelle (11) exzentrisch angeordnet ist.

2. Pumpe zum Fördern einer viskosen Flüssigkeit nach Anspruch 1, dadurch gekennzeichnet, daß wenigstens einer der Durchlässe relativ zur Richtung der Antriebswelle (11) geneigt ist.

## Revendications

1. Dispositif de pompage pour déplacer un fluide visqueux, par exemple un fluide de lubrification, comportant un ensemble muni d'une embouchure d'entrée et d'une embouchure de sortie pour ledit fluide, et des parties relatives fixées et pouvant tourner pour déplacer ledit fluide à l'intérieur dudit ensemble entre ladite embouchure d'entrée et ladite embouchure de sortie, dans lequel ledit ensemble est constitué d'une paire d'éléments formant plaques situées mutuellement en vis à vis (14, 15), dont une première (14) tourne de manière rigide avec un arbre d'entraînement (11) dudit dispositif et une seconde (15) est fixée par rapport audit premier élément formant plaque rotative (14), ledit second élément formant plaque (15) ayant un trou central traversant (18) pour être monté sur ledit arbre (11) et étant muni sur la surface latérale (19) située en vis à vis dudit premier élément formant plaque (14) d'une cavité hélicoïdale (20) qui a ses extrémités sous la forme d'une première embouchure (21) située en vis à vis dudit premier élément formant plaque (14) et d'une seconde embouchure (22) dirigée radialement en vis à vis dudit arbre central (11), ladite cavité hélicoïdale (20) se rétrécissant dans la direction dans laquelle s'écoule le fluide, au moins un passage (25) étant agencé qui, au niveau d'une première extrémité, est situé en vis à vis de la seconde embouchure (22) dudit second élément (15) et au niveau de l'autre extrémité est situé en vis à vis de la sortie dudit dispositif, caractérisé en ce que lesdits premier et second éléments formant plaques (14, 15) sont insérés dans un élément contenant (12) dudit fluide visqueux, ledit second élément formant plaque (15) étant fixé de manière rigide sur ledit élément contenant (12) de telle sorte que ladite première embouchure, qui est l'embouchure d'entrée (21) soit positionnée à proximité de la partie inférieure dudit élément contenant (12), entre ledit trou central (18) dudit second élément formant plaque (15) et ledit arbre rotatif (11), ledit fluide s'écoulant depuis ladite première embouchure (21) vers ladite seconde embouchure (22), un élément (23) formant manchon étant agencé, qui est fixé sur ledit second élément formant plaque (15) et dans lequel est agencé ledit au moins un passage (25), ladite cavité hélicoïdale (20) étant excentrée par rapport au trou destiné audit arbre (11).

2. Dispositif de pompage pour déplacer un fluide visqueux selon la revendication 1, caractérisé en ce que ledit au moins un passage est incliné par rapport à la direction dudit arbre (11).
